# EUROPÄISCHE PATENTANMELDUNG

(11) **EP 4 776 339 A2**
(43) Veröffentlichungstag der Anmeldung: **15.07.2026**
(21) Anmeldenummer: 25219964.1
(22) Anmeldetag: 02.12.2025
(51) Int. Cl.: H01M 4/139, F24F 3/167, F26B 25/06, H01M 10/04, H01M 10/058

(54) **TROCKENRAUMSYSTEM UND VERFAHREN ZUR VERARBEITUNG VON FEUCHTEEMPFINDLICHEM MATERIAL**

(30) Priorität: 19.12.2024 DE 102024138934
(71) Anmelder: Weiss Klimatechnik GmbH, 35447 Reiskirchen (DE)
(72) Erfinder: Röhm, Steffen, 35325 Mücke (DE); Willmot, Martha, 35415 Pohlheim (DE); Bräuer, Ralf, 70435 Stuttgart (DE)
(74) Vertreter: advotec.

(57) **Zusammenfassung**

Die Erfindung betrifft ein Trockenraumsystem (28) und ein Verfahren zur Verarbeitung von einem feuchteempfindlichen Material, insbesondere Batteriezellkomponenten, insbesondere Elektrodenmaterial, Elektrolyte oder dergleichen, wobei das Trockenraumsystem einen gegenüber einer Umgebung (30) verschließbaren Trockenraum (29), eine raumlufttechnische Anlage (31) zur Temperierung und/oder Trocknung von in dem Trockenraum befindlicher Luft umfasst, wobei dem Trockenraum zumindest eine gegenüber dem Trockenraum verschließbare Prozesskammer (35, 36, 37) des Trockenraumsystems angeordnet ist, wobei das Trockenraumsystem eine Entfeuchtereinheit (38) zur Trocknung von in zumindest der Prozesskammer befindlicher Luft umfasst, wobei die Entfeuchtereinheit in dem Trockenraum angeordnet ist.

## Beschreibung

Die Erfindung betrifft ein Trockenraumsystem und ein Verfahren zur Verarbeitung von einem feuchteempfindlichem Material, insbesondere von Batteriezellkomponenten, insbesondere Elektrodenmaterial, Elektrolyte und dergleichen, wobei das Trockenraumsystem eine gegenüber einer Umgebung verschließbaren Trockenraum, eine raumlufttechnische Anlage zur Temperierung und/oder zur Trocknung von in dem Trockenraum befindlicher Luft umfasst, wobei in dem Trockenraum zumindest eine gegenüber dem Trockenraum verschließbare Prozesskammer des Trockenraumsystems angeordnet ist, wobei das Trockenraumsystem eine Entfeuchtereinheit zur Trocknung von in zumindest der Prozesskammer befindlicher Luft umfasst.

Eine Herstellung von Akkumulatoren beziehungsweise sekundären/wiederaufladbaren Batteriespeichern beziehungsweise Batteriezellen beziehungsweise Batteriemodulen, wie beispielsweise von Lithium-Ionen-Akkumulatoren, erfordert verschiedene Produktionsschritte, die zur Herstellung benötigter Batteriezellkomponenten je nach Prozess innerhalb eines Trockenraumsystems durchgeführt werden müssen. Eine Prozessierung der Batteriezellkomponenten wird dabei regelmäßig innerhalb des Trockenraums in Prozesskammern oder sogenannten Mini-Environments durchgeführt. In diesen Prozesskammern ist je nach Prozess beziehungsweise Herstellungsschritt eine Trockenraumatmosphäre beziehungsweise Trockenraumatmosphäre mit einer vergleichsweise geringen Taupunkttemperatur von beispielsweise ca. -50°C ausgebildet.

In dem Trockenraum selbst wird mittels einer raumlufttechnischen Anlage, die im Trockenraum befindliche Luft temperiert, wobei mittels einer Filtervorrichtung eine Partikelkonzentration kontrolliert niedrig gehalten werden kann. Zur Ausbildung der erforderlichen Trockenraumatmosphäre wird eine Entfeuchtereinheit verwendet, die beispielsweise durch einen Rotationsentfeuchter oder auch Sorptionsrotor ausgebildet sein kann. Ein Rotationsentfeuchter ist beispielsweise aus der JB 2001-263725 A bekannt. Insbesondere wird mit dem Rotationsentfeuchter die in dem Trockenraum befindliche Luft als Abluft durch einen Teil des Rotationsentfeuchters geleitet und gelangt teilweise oder vollständig als Zuluft zurück in den Trockenraum. Bei Bedarf kann auch Außenluft durch den Rotationsentfeuchter in den Trockenraum geleitet werden. Diese Zuluft wird dann durch die Entfeuchtereinheit so konditioniert, dass sich die gewünschte Taupunkttemperatur in der Prozesskammer einstellt.

Die Entfeuchtereinheit ist regelmäßig in einem Technikraum in Nähe des Trockenraums installiert und über einen Zuluftkanal und einen Abluftkanal mit dem Trockenraum verbunden. Da sich in dem Trockenraum regelmäßig auch Personen aufhalten, ergibt sich ein Feuchteeintrag in die Trockenraumatmosphäre, sodass eine kontinuierliche Entfeuchtung beziehungsweise Trocknung der in dem Trockenraum befindlichen Luft mittels der Entfeuchtereinheit erfolgen muss. Die Entfeuchtereinheit saugt dazu Prozessluft aus dem Trockenraum über den Abluftkanal an, entfeuchtet diese und führt die Prozessluft wieder den Prozesskammern zu. Infolge von Leckagen im Abluftkanal, Wanddurchleitungen und der Entfeuchtereinheit selbst kommt es zu einem Feuchteeintrag in die Prozessluft. Darüber hinaus muss der Entfeuchtereinheit bei Bedarf Außenluft zugeführt werden, um eventuelle Prozessluftverluste ausgleichen zu können.

Da beispielsweise in dem Technikraum eine Taupunkttemperatur von +15°C bis +20°C vorliegen kann, ist eine zu erbringende Entfeuchterleistung der Entfeuchtereinheit nicht vernachlässigbar, wenn beispielsweise aus dem Technikraum oder einem Außenbereich Luft zu der Prozessluft hinzu gelangt. Hieraus ergibt sich ein erhöhter Energieverbrauch der Entfeuchtereinheit, da diese mit einer höheren Entfeuchterleistung betrieben werden muss. Darüber hinaus ist eine Regelbarkeit einer Taupunkttemperatur und übriger Klimaparameter in dem Trockenraum durch Leckluft und ergänzend zugeführte Außenluft erschwert. Eine Einstellung des Trockenraumsystems auf die gewünschten Betriebsparameter erfordert vergleichsweise viel Zeit, da unbekannte Variablen, wie Leckluft und deren Taupunkttemperatur, nicht bekannt oder beeinflussbar sind. Dies ist insbesondere dann immer der Fall, wenn eine Anpassung des Trockenraumsystems an geänderte Prozesse erforderlich ist.

Der vorliegenden Erfindung liegt daher die Aufgabe zu Grunde, ein Trockenraumsystem sowie ein Verfahren zur Verarbeitung von einem feuchteempfindlichen Material vorzuschlagen, das einen kostengünstigen und einfachen Betrieb des Trockenraumsystems ermöglicht.

Diese Aufgabe wird durch ein Trockenraumsystem mit den Merkmalen des Anspruchs 1 und ein Verfahren mit den Merkmalen des Anspruchs 14 gelöst.

Das erfindungsgemäße Trockenraumsystem dient zur Verarbeitung von einem feuchtempfindlichen Material, insbesondere von Batteriezellkomponenten, insbesondere Elektrodenmaterial, Elektrolyte oder dergleichen, wobei das Trockenraumsystem einen gegenüber einer Umgebung verschließbaren Trockenraum, eine raumlufttechnische Anlage zur Temperierung und/oder zur Trocknung von in dem Trockenraum befindlicher Luft umfasst, wobei in dem Trockenraum zumindest eine gegenüber dem Trockenraum verschließbare Prozesskammer des Trockenraumsystems angeordnet ist, wobei das Trockenraumsystem eine Entfeuchtereinheit zur Trocknung von in zumindest der Prozesskammer befindlicher Luft umfasst, wobei die Entfeuchtereinheit in dem Trockenraum angeordnet ist.

Bei dem Trockenraum handelt es sich um einen vorzugsweise gasdicht verschließbaren Raum, der beispielsweise über eine Schleuse oder dergleichen auch von Personen betreten werden kann. Der Trockenraum unterscheidet sich von dem Trockenraum umgebenden Räumen durch unterschiedliche klimatische Bedingungen. In eventuell einer Decke oder einem Boden des Trockenraums befindliche technische Einrichtungen sind Teil des Trockenraums und innerhalb diesem angeordnet, sofern diese im Wesentlichen den gleichen klimatischen Bedingungen entsprechen. Die raumlufttechnische Anlage dient im Wesentlichen zur Konditionierung der im Trockenraum befindlichen Luft, insbesondere zur Ausbildung der gewünschten Temperatur beziehungsweise Lufttemperatur im Trockenraum beziehungsweise der Prozesskammer. Der Trockenraum kann auch als ein Reinraum ausgebildet sein bzw. das Trockenraumsystem als ein Reinraumsystem. Unter einem Reinraum wird ein Raum im Sinne der Norm EN-ISO 14644 in der zum Prioritätstag gültigen Fassung verstanden. Der Reinraum kann der Klasse ISO8 oder besser bzw. reiner entsprechen.

Der Reinraum weist dann regelmäßig eine Filtervorrichtung mit einem Partikelfilter zur Filterung von der in dem Reinraum bzw. Trockenraum befindlichen Luft auf. Die Filtervorrichtung kann dabei als Teil der raumlufttechnischen Anlage oder auch getrennt von der raumlufttechnischen Anlage ausgebildet sein. Mittels der Filtervorrichtung kann eine gewünschte Partikelkonzentration in der Luft in dem Trockenraum beziehungsweise der Prozesskammer eingestellt werden. Die Prozesskammer, welche auch als Mini-Environment, Micro-Environment oder Makro-Environment bezeichnet werden kann, ist innerhalb des Trockenraums angeordnet und gegenüber dem Trockenraum, vorzugsweise gasdicht, verschließbar. Eine Lufttemperatur und eine Luftfeuchte innerhalb der Prozesskammer kann von einer Lufttemperatur beziehungsweise Luftfeuchte in dem Trockenraum abweichen oder gleich sein. Innerhalb der Kammer kann feuchteempfindliches Material verarbeitet werden. Diese Verarbeitung kann regelmäßig automatisiert durch Maschinen erfolgen, die die erforderlichen Arbeitsschritte ausführen. Die Entfeuchtereinheit dient zur Trocknung von in der Prozesskammer befindlicher Luft beziehungsweise Prozessluft, welche mit dem feuchteempfindlichen Material in Kontakt gelangt. Diese mit der Entfeuchtereinheit getrocknete beziehungsweise entfeuchtete Prozessluft wird von der Entfeuchtereinheit der Prozesskammer mit der gewünschten Taupunkttemperatur zugeführt.

Dadurch dass die Entfeuchtereinheit in dem Trockenraum beziehungsweise innerhalb des Trockenraums angeordnet ist, können eventuelle Leckagen der Entfeuchtereinheit vernachlässigt werden. Bei dem Ansaugen der im Trockenraum beziehungsweise der Prozesskammer befindlichen Luft durch die Entfeuchtereinheit können zwar Leckagen auftreten, diese Leckluft gelangt dann jedoch von dem Trockenraum direkt in die Entfeuchtereinheit. Da die im Trockenraum befindliche Luft bereits eine vergleichsweise niedrige Taupunkttemperatur aufweist, ist eine wesentlich geringere Entfeuchterleistung der Entfeuchtereinheit erforderlich, wenn diese Leckluft zur Erzielung der gewünschten Taupunkttemperatur verwendet wird. Darüber hinaus ist diese Leckluft durch die raumlufttechnische Anlage und die Filtervorrichtung bereits in der gewünschten Weise konditioniert, sodass auch hier keine besonderen energetischen Aufwände zur weiteren Konditionierung erforderlich sind, was dagegen bei einer Zuführung von Außenluft oder Leckluft aus einem Technikraum der Fall wäre. Eine Regelung einer Taupunkttemperatur wird so deutlich stabiler möglich und das Trockenraumsystem kann mit einen insgesamt geringeren Energieaufwand betrieben werden. Darüber hinaus kann das Trockenraumsystem einfacher an veränderte Herstellungsprozesse angepasst werden, da weniger unbekannte Parameter einen Einfluss auf die zu trocknende Luft haben.

Mittels der Entfeuchtereinheit kann Luft aus dem Trockenraum ansaugbar sein. Demnach kann die Entfeuchtereinheit so ausgebildet sein, dass Abluft aus dem Trockenraum von der Entfeuchtereinheit abgesaugt und nachfolgend getrocknet werden kann. Diese Luft beziehungsweise Prozessluft kann dann wieder als Zuluft der zumindest einen Prozesskammer zugeführt werden. Auch kann vorgesehen sein, dass mittels der Entfeuchtereinheit getrocknete Luft zumindest teilweise oder ausschließlich dem Trockenraum, welcher die Prozesskammer umgibt, zugeführt wird. Dann ist es auch möglich, dass der Trockenraum und die im Trockenraum befindliche Prozesskammer mit der Zuluft der Entfeuchtereinheit jeweils konditioniert wird. Neben der Abluft des Trockenraums kann die Entfeuchtereinheit auch Leckluft aus dem Trockenraum ansaugen. Auf eine Einleitung von Außenluft in die Entfeuchtereinheit kann vollständig verzichtet werden. Dann gelangt auch keine Infiltrationsluft in den Technikraum, die als Leckluft angesaugt werden könnte.

Die raumlufttechnische Anlage kann außerhalb des Trockenraums angeordnet sein und eine Temperiervorrichtung für die in dem Trockenraum befindliche Luft umfassen. Beispielsweise kann die raumlufttechnische Anlage in einem Technikraum benachbart dem Trockenraum positioniert sein. Die raumlufttechnische Anlage kann eine Kühleinrichtung und/oder eine Heizeinrichtung aufweisen, mit der eine gewünschte Temperatur innerhalb des Trockenraums ausgebildet werden kann. Weiter kann die raumlufttechnische Anlage auch zur Trocknung bzw. Vortrocknung der im Trockenraum befindlichen Luft ausgebildet sein, beispielsweise mit einer Kondensationstrockenvorrichtung oder einer Absorptionstrockenvorrichtung. Die Temperierung kann mittels einer Regeleinrichtung einer Steuervorrichtung des Trockenraumsystems erfolgen.

Die Prozesskammer kann einen mittels einer Steuervorrichtung des Trockenraumsystems atmosphärenkontrollierten Bereich, insbesondere ein Mini-Environment, Micro-Environment oder Makro-Environment ausbilden. Die Steuervorrichtung kann eine oder mehrere Regeleinrichtungen umfassen, mittels derer Atmosphärenparameter innerhalb der Prozesskammer geregelt werden können. Da sich die Prozesskammer innerhalb des Trockenraums befindet, ist es möglich besonders konstante atmosphärische Bedingungen innerhalb der Prozesskammer auszubilden, da von außen auf die Prozesskammer aus dem Trockenraum einwirkende Einflüsse möglichst gering gehalten werden können. Auch ist es beispielsweise möglich eine Taupunkttemperatur innerhalb der Prozesskammer besonders genau zu regeln. Dazu können in der Prozesskammer geeignete Sensoren zur kontinuierlichen Erfassung der atmosphärischen Bedingungen innerhalb der Prozesskammer angeordnet sein.

In dem Trockenraum kann eine Mehrzahl gegenüber dem Trockenraum verschließbarer Prozesskammern des Trockenraumsystems, innerhalb der das feuchteempfindliche Material verarbeitbar sein kann, angeordnet sein, wobei die Entfeuchtereinheit zur Trocknung von in den Prozesskammern befindlicher Luft dienen kann. Die Mehrzahl von Prozesskammern können in einer Reihenanordnung oder voneinander beabstandet in dem Trockenraum angeordnet sein. Eine Übergabe von zu verarbeitenden Materialien kann automatisiert zwischen den Prozesskammern erfolgen. Die Prozesskammern können hierfür mit beispielsweise Schleusen oder dergleichen ausgebildet sein. Auch kann innerhalb des Trockenraumsystems ein Fördersystem zum Transport der Materialien vorgesehen sein. Die Entfeuchtereinheit beziehungsweise prozesslufttechnische Anlage kann dann auch für die Prozesskammern, bevorzugt für alle Prozesskammern, entfeuchtete Luft mit der jeweils erforderlichen Taupunkttemperatur bereitstellen.

Mittels der Entfeuchtereinheit kann konditionierte Luft durch einen Prozessluftkanal des Trockenraumsystems in die Prozesskammer geleitet werden. Die von der Entfeuchtereinheit getrocknete Luft kann so über den Prozessluftkanal unmittelbar der Prozesskammer zugeführt werden. Der Prozessluftkanal kann dabei innerhalb des Trockenraums verlaufend angeordnet sein. Da die Entfeuchtereinheit ebenfalls in dem Trockenraum angeordnet ist, können derartige Luftkanäle verkürzt werden und damit die Entfeuchtereinheit besonders kompakt ausgebildet sein.

Luft aus der Prozesskammer kann durch einen Prozessabluftkanal des Trockenraumsystems in die Entfeuchtereinheit geleitet werden. Der Prozessabluftkanal kann dann die Prozesskammer unmittelbar mit der Entfeuchtereinheit verbinden. Die Entfeuchtereinheit saugt dann Abluft der Prozesskammer direkt in dieser an. Sofern dann Leckluft aus dem Trockenraum in die Entfeuchtereinheit gelangt, ist dies nur von geringer Bedeutung, da die im Trockenraum befindliche Luft bereits vorkonditioniert ist und eine gegenüber einer Umgebung vergleichsweise niedrige Taupunkttemperatur aufweist.

Alternativ kann Luft aus der Prozesskammer durch eine Luftschleuse in den Trockenraum geleitet werden. In die Prozesskammer über beispielsweise einen Prozessluftkanal eingeleitete Zuluft der Entfeuchtereinheit kann dann innerhalb der Prozesskammer einen im Vergleich zum Trockenraum erhöhten Druck aufweisen, sodass über die Luftschleuse der Prozesskammer die in der Prozesskammer befindliche Prozessluft aus der Prozesskammer in den Trockenraum überströmen bzw. austreten kann. Die Entfeuchtereinheit kann dann so ausgebildet sein, dass diese alleine aus dem Trockenraum Abluft beziehungsweise Prozessluft ansaugt.

Die Entfeuchtereinheit kann mit einem Rotationsentfeuchter mit einem Trocknungsmittel ausgebildet sein. Der Rotationsentfeuchter kann mit einer Wärmeübertrageranordnung ausgebildet sein, über die Prozessluft in die Prozesskammer abgegeben werden kann. Die von dem Rotationsentfeuchter angesaugte Abluft des Trockenraums beziehungsweise der Prozesskammer kann durch einen Heiz-Wärmeübertrager geleitet werden, der die Abluft erwärmt und als Regenerationsluft durch den Rotationsentfeuchter leitet, sodass dann in einem Trocknungsmittel gebundene Feuchtigkeit ausgetrieben werden kann. Weiter kann der Rotationsentfeuchter einen Lüfter umfassen, der die Abluft ansaugen kann.

Das Trockenraumsystem kann eine Filtervorrichtung mit einem Partikelfilter umfassen, mittels dem eine vorbestimmte Partikelkonzentration der Luft ausgebildet werden kann. Die Vorrichtung kann einen Lüfter oder dergleichen umfassen, mittels dem Luft durch den Partikelfilter geleitet werden kann. Der Partikelfilter kann beispielsweise in einer Decke des Trockenraums, in einer Decke der Prozesskammer und/oder in der Entfeuchtereinheit angeordnet sein. Insbesondere kann eine Mehrzahl von Partikelfiltern vorgesehen sein.

Die Entfeuchtereinheit kann mit einer Kühleinrichtung und/oder mit einer Filtereinrichtung ausgebildet sein. Wenn die Prozessluft von der Entfeuchtereinheit entfeuchtet wurde, kann diese durch eine Kühleinrichtung, welche durch einen Kühl-Wärmeübertrager gebildet sein kann, und/oder die Filtereinrichtung, welche durch einen Partikelfilter gebildet sein kann, geleitet werden. Dadurch ist es möglich unmittelbar innerhalb der Prozesskammer Luft mit der gewünschten Temperatur und Partikelkonzentration zur Verfügung zu stellen. Die Filtereinrichtung kann Teil einer eventuell vorhandenen Filtervorrichtung des Trockenraumsystems sein und/oder in der Entfeuchtereinheit integriert sein. Die Filtereinrichtung kann auch als eine Filterdecke in der Prozesskammer ausgeführt sein.

Mittels der Entfeuchtereinheit in der Prozesskammer kann eine Trockenraumatmosphäre mit einer Taupunkttemperatur ausgebildet werden, die niedriger ist, als eine Taupunkttemperatur in dem die Prozesskammer umgebenen Trockenraum. Die Taupunkttemperatur in dem Trockenraum kann an einen Aufenthalt von Personen in dem Trockenraum angepasst sein. Wenn die Taupunkttemperatur in dem Trockenraum vergleichsweise niedrig gegenüber einer Taupunkttemperatur einer Umgebung des Trockenraums ist, kann eventuell vorhandene Leckluft aus dem Trockenraum eine in der Prozesskammer noch niedrigere ausgebildete Taupunkttemperatur nur wenig beeinflussen. Gleichwohl kann in der Prozesskammer dann auch eine besonders niedrige Taupunkttemperatur ausgebildet werden.

Mittels der Entfeuchtereinheit kann in der Prozesskammer eine Trockenraumatmosphäre mit einer Taupunkttemperatur von ≤ 0°C, bevorzugt mit einer Taupunkttemperatur von ≤ -10°C, besonders bevorzugt mit einer Taupunkttemperatur von ≤ -40 °C, ausgebildet werden. Diese Taupunkttemperaturen erlauben vorteilhaft eine Verarbeitung von Elektrodenmaterial, Elektrolyte oder dergleichen zur Herstellung von Batteriezellkomponenten.

Bei dem erfindungsgemäßen Verfahren zur Verarbeitung von einem feuchteempfindlichen Material, insbesondere von Batteriezellkomponenten, insbesondere Elektrodenmaterial, Elektrolyte oder dergleichen, zum Herstellen einer Batterie, mit einem Trockenraumsystem, wird in einem gegenüber einer Umgebung verschließbaren Trockenraum des Trockenraumsystems befindliche Luft mit einer raumlufttechnischen Anlage des Trockenraumsystems temperiert und/oder getrocknet, wobei in zumindest einer gegenüber dem Trockenraum verschließbaren Prozesskammer des Trockenraumsystems, die in dem Trockenraum angeordnet ist, befindliche Luft mit einer Entfeuchtereinheit des Trockenraumsystems getrocknet wird, wobei die Entfeuchtereinheit in dem Trockenraum angeordnet ist. Zu den Vorteilen des erfindungsgemäßen Verfahrens wird auf die Vorteilsbeschreibung der erfindungsgemäßen Vorrichtung verwiesen.

Mittels einer Steuervorrichtung des Trockenraumsystems kann eine Steuerung der Entfeuchtereinheit, der Temperiereinheit und/oder der Filtervorrichtung in Abhängigkeit einer Temperatur, einer Luftfeuchte und/oder einer Partikelkonzentration der Luft in der Prozesskammer erfolgen. Die Steuervorrichtung kann dazu jeweils Messeinrichtungen umfassen, die mittels Sensoren in der Prozesskammer eine Temperatur, Luftfeuchte und/oder Partikelkonzentration der Luft ermitteln können. Dies ermöglicht eine individuelle Regelung der Temperatur, der Luftfeuchte und/oder der Partikelkonzentration der in der jeweiligen Prozesskammer befindlichen Luft durch die Steuervorrichtung.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend werden bevorzugte Ausführungsformen der Erfindung oder Bezugnahme auf die beigefügten Zeichnungen näher erläutert.

Es zeigen:
- **Fig.** 1: eine schematische Darstellung eines Trockenraumsystems nach dem Stand der Technik;
- **Fig. 2**: eine schematische Darstellung einer ersten Ausführungsform eines Trockenraumsystems;
- **Fig. 3**: eine schematische Darstellung einer zweiten Ausführungsform eines Trockenraumsystems.

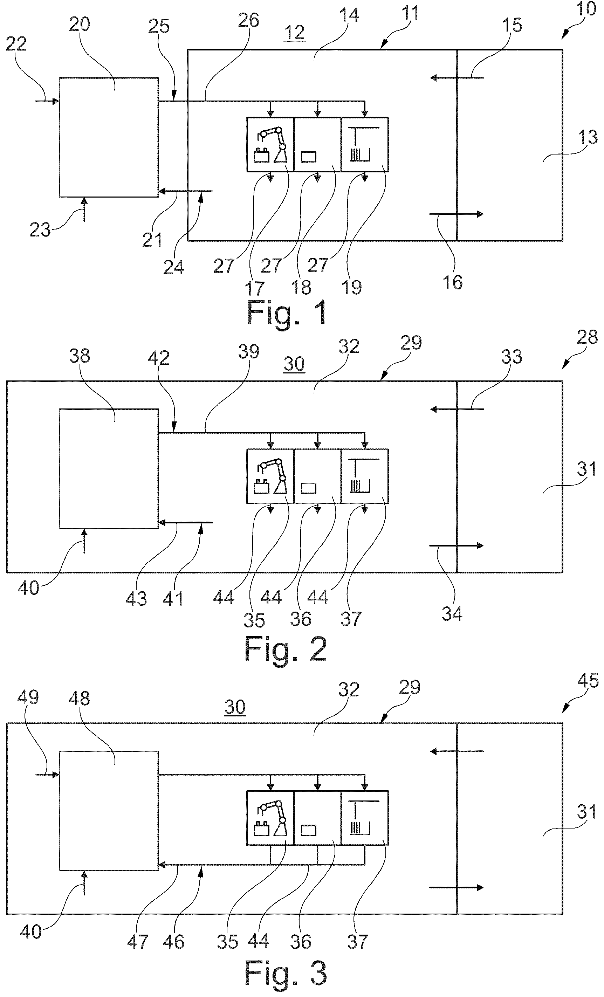

Die **Fig. 1** zeigt eine schematische Darstellung eines Trockenraumsystems 10 gemäß dem Stand der Technik. Das Trockenraumsystem umfasst einen Trockenraum 11, der gegenüber einer Umgebung 12 verschließbar, insbesondere gasdicht verschließbar ist, eine raumlufttechnische Anlage 13 zur Temperierung eines Innenraums 14 des Trockenraums 11 und eine hier nicht näher dargestellte Filtervorrichtung zur Filterung von in dem Trockenraum 11 befindlicher Luft. Die raumlufttechnische Anlage 13 versorgt den Innenraum 14 mit Zuluft 15 und Abluft 16. In dem Innenraum 14 sind Prozesskammern 17, 18, 19 angeordnet, innerhalb derer feuchteempfindliches Material verarbeitbar ist. Außerhalb des Trockenraums 11 ist eine Entfeuchtereinheit 20 angeordnet, die zur Trocknung von in den Prozesskammern 17, 18, 19 befindlicher Luft beziehungsweise zur Trocknung von Luft aus dem Innenraum 14 dient. Mittels der Entfeuchtereinheit 20 wird Abluft 21 aus dem Innenraum 14 angesaugt und von der Entfeuchtereinheit 20 entfeuchtet beziehungsweise getrocknet. Bei Bedarf kann Außenluft 22 zugeführt werden. Weiter gelangt Leckluft 23 in die Entfeuchtereinheit 20 beziehungsweise in einen Prozessabluftkanal 24. Über einen Prozesszuluftkanal 25 wird in der Entfeuchtereinheit 20 getrocknete Zuluft 26 in die jeweiligen Prozesskammern 17, 18, 19 gefördert. Über nicht näher dargestellte Luftschleusen der Prozesskammern 17, 18, 19 tritt Prozessluft 27 in den Innenraum 14 aus und wird als Abluft 21 von der Entfeuchtereinheit 20 wieder angesaugt.

Die **Fig. 2** zeigt ein Trockenraumsystem 28 mit einem Trockenraum 29, der gegenüber einer Umgebung 30 verschließbar, insbesondere gasdicht verschließbar ist. Auch hier ist eine raumlufttechnische Anlage 31 vorgesehen, mittels der einem Innenraum 32 des Trockenraums 29 Zuluft 33 zugeführt und Abluft 34 abgeführt werden kann. Die raumlufttechnische Anlage 31 dient zur Temperierung beziehungsweise Konditionierung der im Innenraum 32 befindlichen Luft. Eine eventuell vorhandene Filtervorrichtung zur Filterung von in dem Innenraum 32 des Trockenraums 29 befindlicher Luft ist hier nicht näher dargestellt. Auch sind in dem Innenraum 32 des Trockenraums 29 Prozesskammern 35, 36, 37 zur Verarbeitung von einem feuchteempfindlichen Material, insbesondere von Batteriezellkomponenten, angeordnet. Weiter ist in dem Innenraum 32 eine Entfeuchtereinheit 38 zur Trocknung von in dem Prozesskammern 35, 36, 37 beziehungsweise dem Innenraum 32 befindlicher Luft angeordnet. Die Entfeuchtereinheit 38 saugt dabei Abluft 43 aus dem Innenraum 32 an, wobei auch Leckluft 40 in die Entfeuchtereinheit 38 beziehungsweise in einen Prozessabluftkanal 41 gelangen kann. Über einen Prozesszuluftkanal 42 wird von der Entfeuchtereinheit 38 getrocknete Zuluft 39 den jeweiligen Prozesskammern 35, 36, 37 zugeführt. Über hier nicht näher dargestellte Luftschleusen der Prozesskammern 35, 36, 37 gelangt Prozessluft 44 aus den Prozesskammern 35, 36, 37 in den Innenraum 32 und wird von der Entfeuchtereinheit 38 als Abluft 43 wieder angesaugt.

Die **Fig. 3** zeigt eine weitere Ausführungsform eines Trockenraumsystems 45 im Unterschied zum Trockenraumsystem aus der **Fig. 2** einen Prozessabluftkanal 46 aufweist, mit dem Abluft 47 direkt von den Prozesskammern 35, 36, 37 angesaugt werden kann, ohne dass Prozessluft in den Innenraum 32 des Trockenraums 29 gelangt. Eine Entfeuchtereinheit 48 ist hier so ausgebildet, dass Infiltrationsluft 49 aus dem Innenraum 32 angesaugt werden kann, wenn dies erforderlich ist. Alternativ kann die Infiltrationsluft 49 auch zusammen mit der Abluft 47 an dem Prozessabluftkanal 46 angesaugt werden.

## Patentansprüche

1. Trockenraumsystem (28, 45) zur Verarbeitung von einem feuchteempfindlichen Material, insbesondere von Batteriezellkomponenten, insbesondere Elektrodenmaterial, Elektrolyte oder dergleichen, wobei das Trockenraumsystem einen gegenüber einer Umgebung (30) verschließbaren Trockenraum (29), eine raumlufttechnischen Anlage (31) zur Temperierung und/oder zur Trocknung eine von in dem Trockenraum befindlicher Luft umfasst, wobei in dem Trockenraum zumindest eine gegenüber dem Trockenraum verschließbare Prozesskammer (35, 36, 37) des Trockenraumsystems angeordnet ist, wobei das Trockenraumsystem eine Entfeuchtereinheit (38, 48) zur Trocknung von in zumindest der Prozesskammer befindlicher Luft umfasst, **dadurch gekennzeichnet,**
**dass** die Entfeuchtereinheit in dem Trockenraum angeordnet ist.

2. Trockenraumsystem nach Anspruch 1,
**dadurch gekennzeichnet,**
**dass** mittels der Entfeuchtereinheit (38, 48) Luft aus dem Trockenraum ansaugbar ist.

3. Trockenraumsystem nach Anspruch 1 oder 2,
**dadurch gekennzeichnet,**
**dass** die raumlufttechnische Anlage (31) außerhalb des Trockenraums (29) angeordnet ist und eine Temperiervorrichtung für die in dem Trockenraum befindliche Luft umfasst.

4. Trockenraumsystem nach einem der vorangehenden Ansprüche,
**dadurch gekennzeichnet,**
**dass** die Prozesskammer (35, 36, 37) einen mittels einer Steuervorrichtung des Trockenraumsystems (28, 45) atmosphärenkontrollierten Bereich, insbesondere ein Mini-Environment, Micro-Environment oder Makro-Environment ausbildet.

5. Trockenraumsystem nach einem der vorangehenden Ansprüche,
**dadurch gekennzeichnet,**
**dass** in dem Trockenraum (29) eine Mehrzahl gegenüber dem Trockenraum verschließbarer Prozesskammern (35, 36, 37) des Trockenraumsystems (28, 45), innerhalb der das feuchteempfindliche Material verarbeitbar ist, angeordnet sind, wobei die Entfeuchtereinheit (38, 48) zur Trocknung von in den Prozesskammern befindlicher Luft dient.

6. Trockenraumsystem nach einem der vorangehenden Ansprüche,
**dadurch gekennzeichnet,**
**dass** mittels der Entfeuchtereinheit (38, 48) konditionierte Luft durch einen Prozesszuluftkanal (42) des Trockenraumsystems (28, 45) in die Prozesskammer (35, 36, 37) leitbar ist.

7. Trockenraumsystem nach einem der vorangehenden Ansprüche,
**dadurch gekennzeichnet,**
**dass** Luft aus der Prozesskammer (35, 36, 37) durch einen Prozessabluftkanal (46) des Trockenraumsystems (45) in die Entfeuchtereinheit (48) leitbar ist.

8. Trockenraumsystem nach einem der Ansprüche 1 bis 6,
**dadurch gekennzeichnet,**
**dass** Luft aus der Prozesskammer (35, 36, 37) durch eine Luftschleuse in den Trockenraum (29) leitbar ist.

9. Trockenraumsystem nach einem der vorangehenden Ansprüche,
**dadurch gekennzeichnet,**
**dass** die Entfeuchtereinheit (38, 48) mit einem Rotationsentfeuchter mit einem Trocknungsmittel ausgebildet ist.

10. Trockenraumsystem nach einem der vorangehenden Ansprüche,
**dadurch gekennzeichnet,**
**dass** das Trockenraumsystem eine Filtervorrichtung mit einem Partikelfilter umfasst, mittels dem eine vorbestimmte Partikelkonzentration der Luft ausbildbar ist.

11. Trockenraumsystem nach einem der vorangehenden Ansprüche,
**dadurch gekennzeichnet,**
**dass** die Entfeuchtereinheit (38, 48) mit einer Kühleinrichtung und/oder mit einer Filtereinrichtung ausgebildet ist.

12. Trockenraumsystem nach einem der vorangehenden Ansprüche,
**dadurch gekennzeichnet,**
**dass** mittels der Entfeuchtereinheit (38, 48) in der Prozesskammer (35, 36, 37) eine Trockenraumatmosphäre mit einer Taupunkttemperatur ausbildbar ist, die niedriger ist als eine Taupunkttemperatur in dem die Prozesskammer umgebenden Trockenraum (29).

13. Trockenraumsystem nach einem der vorangehenden Ansprüche,
**dadurch gekennzeichnet,**
**dass** mittels der Entfeuchtereinheit (38, 48) in der Prozesskammer (35, 36, 37) eine Trockenraumatmosphäre mit einer Taupunkttemperatur von ≤ 0 °C, bevorzugt mit einer Taupunkttemperatur von ≤ -10 °C, besonders bevorzugt mit einer Taupunkttemperatur von ≤ -40 °C, ausbildbar ist.

14. Verfahren zur Verarbeitung von einem feuchteempfindlichen Material, insbesondere von Batteriezellkomponenten, insbesondere Elektrodenmaterial, Elektrolyte oder dergleichen, zum Herstellen einer Batterie, mit einem Trockenraumsystem (28, 45), wobei in einem gegenüber einer Umgebung (30) verschließbaren Trockenraum (29) des Trockenraumsystems befindliche Luft mit einer raumlufttechnischen Anlage (31) des Trockenraumsystems temperiert und/oder getrocknet wird, wobei in zumindest einer gegenüber dem Trockenraum verschließbaren Prozesskammer (35, 36, 37) des Trockenraumsystems, die in dem Trockenraum angeordnet ist, befindliche Luft mit einer Entfeuchtereinheit (38, 48) des Trockenraumsystems getrocknet wird, **dadurch gekennzeichnet,**
**dass** die Entfeuchtereinheit in dem Trockenraum angeordnet ist.

15. Verfahren nach Anspruch 14,
**dadurch gekennzeichnet,**
**dass** mittels einer Steuervorrichtung des Trockenraumsystems (28, 45) eine Steuerung der Entfeuchtereinheit (38, 48), der Temperiereinheit und/oder der Filtervorrichtung in Abhängigkeit einer Temperatur, einer Luftfeuchte und/oder einer Partikelkonzentration der Luft in der Prozesskammer (35, 36, 37) erfolgt.
